# FASCICULE DE BREVET EUROPEEN

(11) **EP 3 109 467 B1**
(45) Date de publication et mention de la délivrance du brevet: **13.12.2017**
(21) Numéro de dépôt: 16174477.6
(22) Date de dépôt: 14.06.2016
(51) Int. Cl.: F03H 1/00, B64G 1/42, H01H 19/56, B64G 1/40

(54) **SYSTEME DE COMMANDE DE PLUSIEURS PROPULSEURS ELECTRIQUES POUR SATELLITE ET DISPOSITIF DE PROPULSION ELECTRIQUE COMPORTANT UN TEL SYSTEME DE COMMANDE**
STEUERSYSTEM VON MEHREREN ELEKTRISCHEN TRIEBWERKEN FÜR SATELLIT, UND ELEKTRISCHE ANTRIEBSVORRICHTUNG, DIE EIN SOLCHES STEUERSYSTEM UMFASST
SYSTEM FOR CONTROLLING A PLURALITY OF ELECTRICAL THRUSTERS FOR A SATELLITE AND ELECTRIC PROPULSION DEVICE COMPRISING SUCH A CONTROL SYSTEM

(30) Priorité: 26.06.2015 FR 1501345
(43) Date de publication de la demande: 28.12.2016
(73) Titulaire: THALES, 92400 Courbevoie (FR)
(72) Inventeur: BAUDASSE, Yannick, 06156 CANNES LA BOCCA Cedex (FR); PIN, Ronan, 06156 CANNES LA BOCCA Cedex (FR); GUICHON, David, 06156 CANNES LA BOCCA Cedex (FR); VEZAIN, Stéphane, 06210 MANDELIEU (FR)
(74) Mandataire: Nguyen, Dominique

(56) Documents cités:
- US-A- 3 699 279
- US-A- 5 339 623
- US-A1- 2014 137 537

## Description

La présente invention concerne un système de commande de plusieurs propulseurs électriques pour satellite et un dispositif de propulsion électrique comportant un tel système de commande. Elle s'applique à toute plateforme de satellite à propulsion électrique.

Actuellement, les nouveaux systèmes de propulsion électrique comportent plusieurs propulseurs électriques, tels que des propulseurs à grilles ou des propulseurs à plasma, qui nécessitent d'être fiabilisés afin de couvrir la totalité des cas de panne au niveau des sources de puissance qui alimentent les propulseurs électriques et au niveau des composants internes aux propulseurs électriques. Pour cela, il est nécessaire de pouvoir connecter indifféremment, chaque source d'alimentation en puissance à n'importe lequel des propulseurs électriques, en cas de panne simple ou en cas de pannes multiples.

Les systèmes de commande actuels sont souvent conçus en utilisant une pluralité de relais mécaniques interconnectant les sources d'alimentation en puissance aux propulseurs électriques. Ces systèmes sont limités en terme de configurations possibles car les relais mécaniques ne comportent qu'une seule entrée pouvant être connectée à uniquement deux sorties. La panne d'une source d'alimentation en puissance PPU (en anglais : Power Processing Unit) entraîne donc le non fonctionnement de deux propulseurs électriques. Par ailleurs, ils comportent un problème de fiabilité car ils ne comportent pas de redondance de l'électronique de commande. En outre, ces systèmes de commande nécessitent l'utilisation d'un grand nombre de sources d'alimentation en puissance et de relais mécaniques, ce qui génère des problèmes de coût, de masse et d'encombrement importants.

Le document US2014/0137537, décrit un système de propulsion comportant des propulseurs électriques, en particulier quatre tuyères à propulsion ionique à grilles, connectés par paire à deux sources d'alimentation en puissance par l'intermédiaire de deux commutateurs rotatifs différents. Chaque commutateur rotatif a deux positions différentes qui sélectionnent respectivement la première ou la deuxième source de puissance pour alimenter chaque propulseur électrique en fonction de la position angulaire d'un arbre rotatif. Cependant, chaque commutateur rotatif n'a que deux entrées et deux sorties et ne permet de réaliser que deux connexions différentes. Cela ne permet pas de remplir une fonction de redondance en cas de panne, nécessite l'utilisation de plusieurs dispositifs de commutation différents pour assurer l'alimentation d'un plus grand nombre de propulseurs, et engendre des problèmes d'encombrement et de masse additionnelle prohibitifs pour une application sur un satellite. En outre les commutateurs rotatifs sont définis pour des propulseurs électriques à grilles et sont incompatibles des propulseurs électriques à plasma.

Le but de l'invention est de remédier aux inconvénients des systèmes de commande connus et de réaliser un système de commande de plusieurs propulseurs électriques qui soit fiable et qui permette d'assurer un pilotage des propulseurs en fonction des phases de vie du satellite et de tous les types de cas de panne, au niveau des sources d'alimentation, en puissance et en signaux de commande, et au niveau des composants internes aux propulseurs électriques. En particulier, le but de l'invention est de réaliser un système de commande dans lequel toutes les sources d'alimentation disponibles peuvent être connectées indifféremment à n'importe lequel des propulseurs électriques.

Pour cela, l'invention concerne un système de commande de plusieurs propulseurs électriques comportant des sources d'alimentation, en puissance et en signaux de commande, aptes à piloter indifféremment chacun des propulseurs électriques. Le système de commande comporte en outre un dispositif de commutation apte à relier n'importe laquelle des sources d'alimentation à n'importe lequel des propulseurs électriques, le dispositif de commutation comportant un rouleau principal rotatif divisé en plusieurs secteurs angulaires différents répartis autour d'un axe longitudinal de rotation du rouleau principal, chaque secteur angulaire comportant des pistes conductrices d'entrée, des pistes conductrices de sortie et un réseau électrique pré-câblé dédié reliant les pistes d'entrée aux pistes de sortie du secteur angulaire correspondant, les réseaux électriques pré-câblés associés aux différents secteurs angulaires étant tous différents et dédiés à différentes configurations de pilotage des propulseurs électriques par les sources d'alimentation.

Avantageusement, chaque réseau électrique pré-câblé est solidaire en rotation, du secteur angulaire associé.

Avantageusement, le système de commande comporte en outre au moins un moteur pas à pas, fixé sur l'axe longitudinal de rotation du rouleau principal, le moteur pas à pas étant apte à entraîner le rouleau principal en rotation pour sélectionner un secteur angulaire du rouleau principal, le secteur angulaire sélectionné étant dédié à une configuration de pilotage choisie.

Avantageusement, les pistes conductrices d'entrée et les pistes conductrices de sortie sont respectivement aménagées en deux zones distinctes situées à deux extrémités opposées du rouleau principal.

Avantageusement, les différents secteurs angulaires sont séparés entre eux par des isolants.

Avantageusement, le système de commande comporte en outre des premiers contacteurs à balais aptes à relier les sources d'alimentation aux pistes conductrices d'entrée respectives du secteur angulaire sélectionné et des seconds contacteurs à balais aptes à relier les propulseurs électriques aux pistes de sortie respectives du secteur angulaire sélectionné.

Alternativement, le système de commande peut comporter en outre un rouleau secondaire fixe, monté parallèlement au rouleau principal, le rouleau secondaire comportant des pistes conductrices continues, respectivement disposées en vis-à-vis des pistes conductrices sectorisées du rouleau principal.

Avantageusement, le rouleau secondaire peut comporter un axe longitudinal relié à l'axe longitudinal de rotation du rouleau principal par l'intermédiaire de lames flexibles croisées.

Alternativement, le système de commande peut comporter deux rouleaux principaux rotatifs montés parallèlement et symétriquement de part et d'autre du rouleau secondaire, les deux rouleaux principaux comportant des pistes conductrices discontinues disposées en vis-à-vis des pistes conductrices continues du rouleau secondaire. Dans ce cas, avantageusement, le rouleau secondaire peut comporter un axe longitudinal relié aux axes longitudinaux de rotation des deux rouleaux principaux par l'intermédiaire de lames flexibles croisées ou, alternativement, par l'intermédiaire de biellettes associées à des roulements et des engrenages.

Alternativement, le système de commande peut comporter en outre un rouleau secondaire rotatif autour d'un axe longitudinal et monté parallèlement au rouleau principal, le rouleau secondaire comportant des pistes conductrices discontinues, respectivement disposées en vis-à-vis des pistes conductrices sectorisées du rouleau principal.

L'invention concerne également un dispositif de propulsion électrique comportant au moins un tel système de commande, et comportant en outre au moins deux propulseurs électriques connectés à n'importe laquelle des sources d'alimentation par l'intermédiaire du système de commande.

D'autres particularités et avantages de l'invention apparaîtront clairement dans la suite de la description donnée à titre d'exemple purement illustratif et non limitatif, en référence aux dessins schématiques annexés qui représentent :

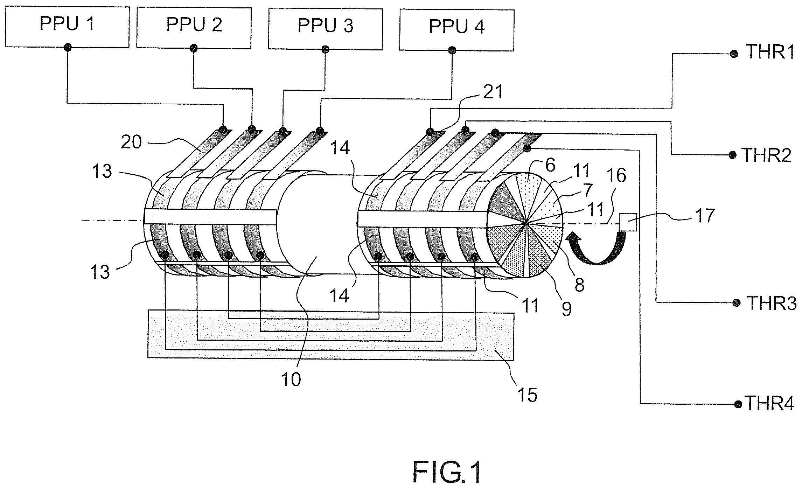

- figure 1 : un schéma d'un premier exemple de système de commande de plusieurs propulseurs électriques équipé d'un dispositif de commutation dans lequel un rouleau principal rotatif comporte des pistes conductrices discontinues sectorisées associées à des réseaux électriques pré-câblés dédiés reliant des pistes conductrices d'entrée et des pistes conductrices de sortie, selon l'invention;

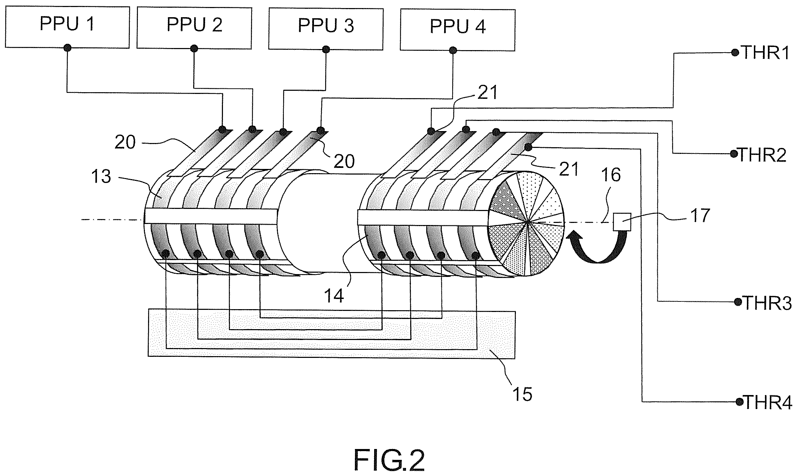

- figure 2 : un schéma illustrant un deuxième exemple de réseau électrique pré-câblé pouvant être intégré dans un secteur angulaire du rouleau principal, selon l'invention;

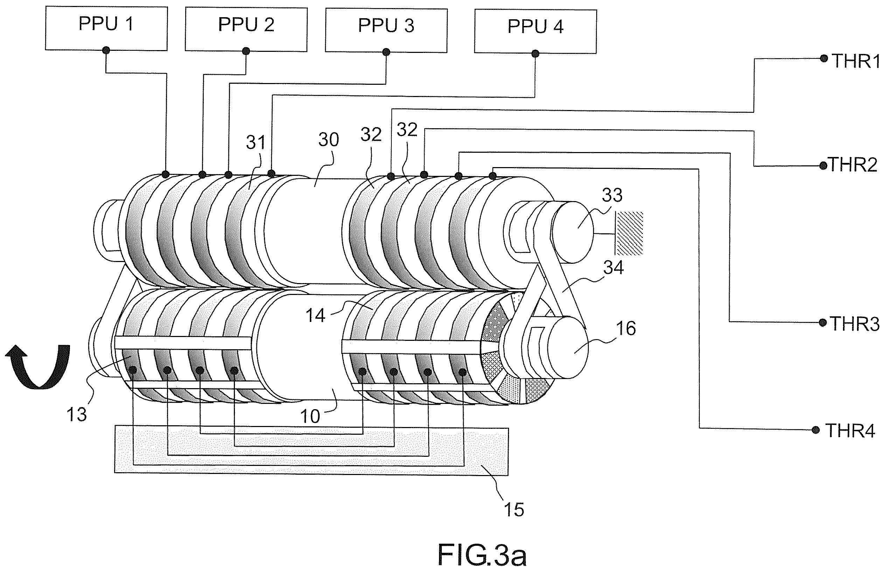

- figure 3a : un schéma d'un deuxième exemple de système de commande de plusieurs propulseurs électriques équipé d'un dispositif de commutation comportant un rouleau principal rotatif muni de pistes conductrices discontinues sectorisées et un rouleau secondaire fixe muni de pistes conductrices continues, monté parallèlement et en vis-à vis du rouleau principal, selon l'invention ;

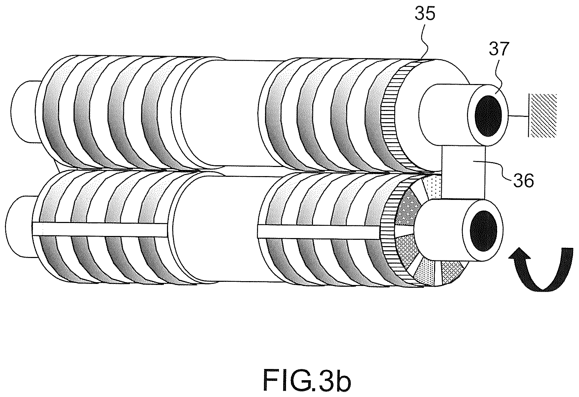

- figure 3b : une variante de réalisation du système de commande de la figure 3a ;

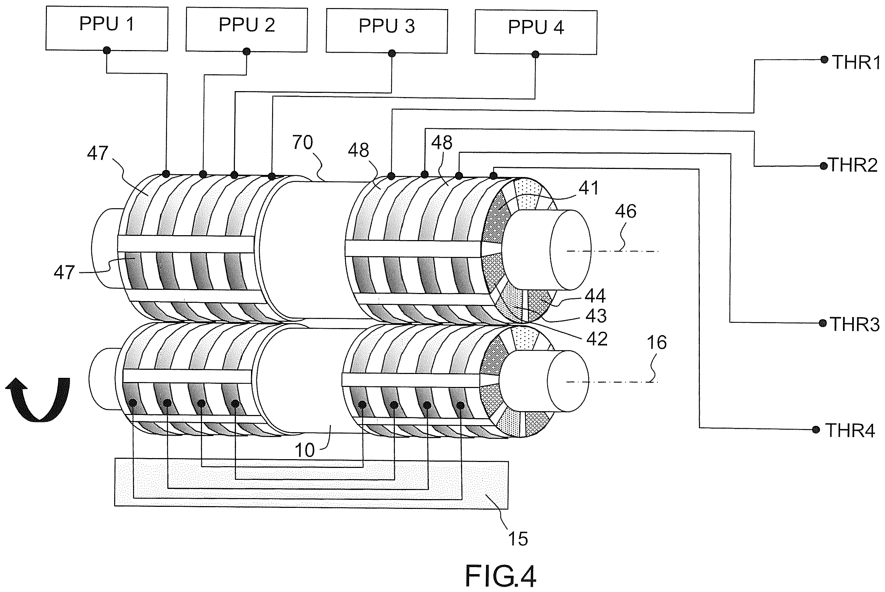

- figure 4 : un schéma d'un troisième exemple de système de commande de plusieurs propulseurs électriques équipé d'un dispositif de commutation comportant deux rouleaux rotatifs munis de pistes conductrices discontinues sectorisées et montés parallèlement et en vis-à vis l'un de l'autre, selon l'invention ;

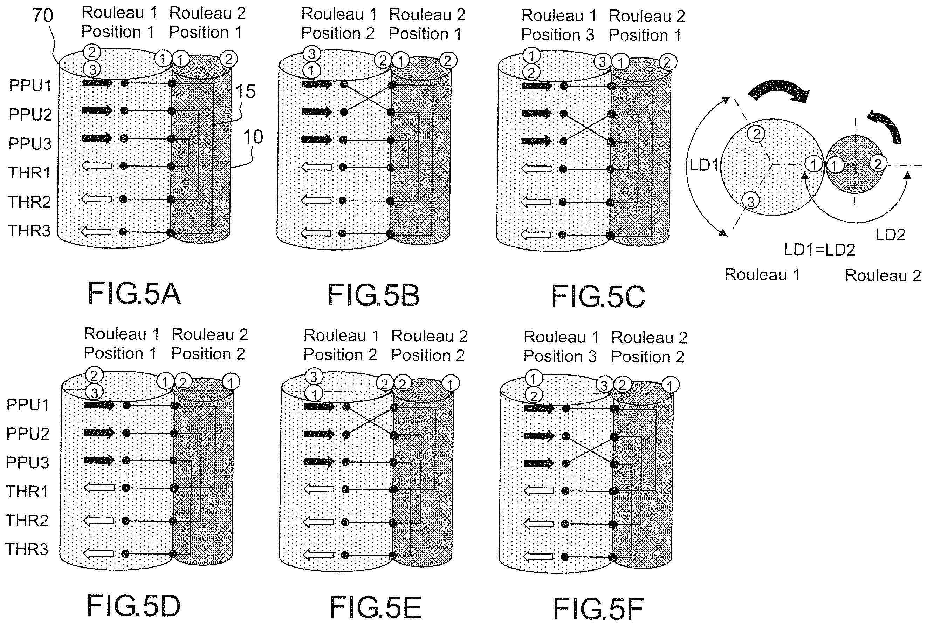

- figures 5A, 5B, 5C, 5D, 5E, 5F : des schémas illustrant un exemple de six configurations de pilotage différentes, selon l'invention ;

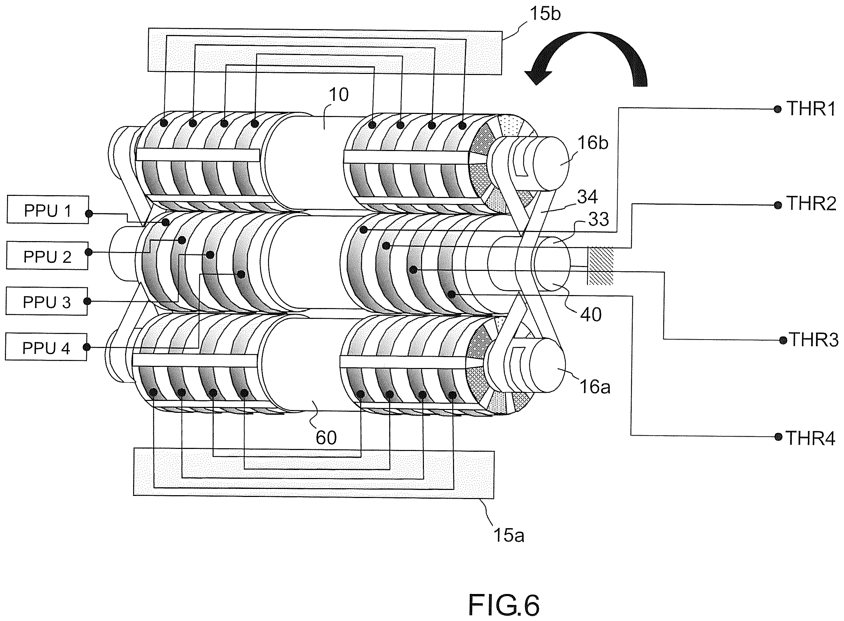

- figure 6: un schéma d'un quatrième exemple de système de commande de plusieurs propulseurs électriques équipé d'un dispositif de commutation comportant deux rouleaux principaux rotatifs et un rouleau secondaire fixe, les deux rouleaux principaux étant montés symétriquement de part et d'autre du rouleau secondaire, selon l'invention.

Selon l'invention, le système de commande comporte plusieurs sources d'alimentation, en puissance électrique et en signaux de commande, PPU1, PPU2, PPU3, PPU4 et un dispositif de commutation, chaque source d'alimentation étant apte à piloter, indifféremment, différents propulseurs électriques THR1, THR2, THR3, THR4, par l'intermédiaire du dispositif de commutation. Les différents propulseurs électriques peuvent être commandés simultanément, ou séquentiellement, par les différentes sources d'alimentation, certains propulseurs électriques pouvant partager temporellement une source d'alimentation commune. Dans l'exemple explicitement représenté sur la figure 1, quatre propulseurs électriques sont pilotés simultanément par quatre sources d'alimentation différentes, mais ce nombre n'est pas limitatif, il est possible d'augmenter ou de diminuer le nombre de sources d'alimentation et/ou le nombre de propulseurs électriques. Notamment, selon les besoins ou les cas de panne, il est possible de n'utiliser seulement qu'une, ou deux, ou trois sources d'alimentation pour piloter un ou plusieurs propulseurs électriques. De même, il est possible de piloter plusieurs propulseurs électriques par intermittence, en utilisant différentes sources d'alimentation pour un même propulseur électrique, ou une même source d'alimentation pour plusieurs propulseurs électriques différents. Différentes configurations de pilotage sont donc possibles, ce qui permet de continuer à assurer un bon fonctionnement du dispositif de commande lorsque survient une panne.

Le dispositif de commutation est apte à relier n'importe laquelle des sources d'alimentation PPU1, PPU2, PPU3, PPU4 à n'importe lequel des propulseurs électriques THR1, THR2, THR3, THR4 par l'intermédiaire de circuits électriques pré-câblés dédiés et intégrés dans le dispositif de commutation, chaque circuit électrique pré-câblé étant apte à transmettre tous les signaux de puissance et tous les signaux de commande nécessaires au pilotage d'un propulseur électrique. Comme illustré sur la figure 1, le dispositif de commutation comporte un rouleau principal 10 rotatif divisé en plusieurs secteurs angulaires différents 6, 7, 8, 9, répartis autour d'un axe longitudinal de rotation du rouleau principal. Les différents secteurs angulaires sont séparés entre eux par des isolants 11.

Chaque secteur angulaire comporte des pistes conductrices d'entrée 13, des pistes conductrices de sortie 14 et un réseau électrique pré-câblé 15 dédié reliant les pistes d'entrée aux pistes de sortie du secteur angulaire correspondant. Les pistes conductrices d'entrée 13 et les pistes conductrices de sortie 14 peuvent par exemple, être respectivement aménagées en deux zones distinctes situées à deux extrémités opposées du rouleau principal 10.

Les réseaux électriques pré-câblés associés aux différents secteurs angulaires sont tous différents les uns des autres et permettent d'assurer un grand nombre de liaisons différentes entre les propulseurs électriques et les différentes sources d'alimentation, et correspondent donc à différentes configurations de pilotage des propulseurs électriques par les sources d'alimentation. Deux exemples de réseaux électriques pré-câblés différents sont illustrés sur les figures 1 et 2. Plus le nombre de secteurs angulaires est important, plus le nombre de liaisons différentes est élevé. Chaque réseau électrique pré-câblé est solidaire en rotation, du secteur angulaire associé.

Pour entraîner le rouleau principal 10 en rotation, le dispositif de commutation peut comporter en outre au moins un premier moteur pas à pas 17, couplé à l'axe de rotation 16 du rouleau principal. La rotation du rouleau principal permet de sélectionner un secteur angulaire associé à un réseau électrique pré-câblé dédié à une configuration de pilotage choisie. Il est possible d'utiliser un double bobinage sur le moteur pas à pas, afin d'ajouter de la redondance en cas de panne. Alternativement, la redondance peut aussi être réalisée par ajout d'un deuxième moteur pas à pas, le deuxième moteur étant destiné à remplacer le premier moteur en cas de défaillance. Le nombre de configurations de pilotage différentes est alors égal au nombre de secteurs angulaires différents.

Pour assurer la liaison entre les sources d'alimentation et le dispositif de commutation, le système de commande peut comporter en outre des premiers contacteurs à balais 20 aptes à relier les sources d'alimentation aux pistes conductrices d'entrée 13 respectives du secteur angulaire sélectionné et des seconds contacteurs à balai 21 aptes à relier les propulseurs électriques aux pistes conductrices de sortie 14 respectives du secteur angulaire sélectionné. Pour sélectionner un secteur angulaire particulier associé à une configuration de pilotage choisie, il suffit de positionner ledit secteur angulaire, par rotation du rouleau principal, en regard des contacteurs à balais 20.

Chaque piste conductrice est dimensionnée en fonction de la puissance électrique à transmettre, les pistes conductrices transmettent donc successivement de la puissance ou du signal. De préférence, les pistes conductrices dédiées à la transmission de puissance seront regroupées, afin de limiter les perturbations dans les circuits de commande. Pour chaque configuration de pilotage, le dispositif de commutation permet ainsi de transmettre la puissance électrique et tous les signaux de commande nécessaires au pilotage des différents propulseurs électriques par l'intermédiaire d'un seul secteur angulaire sélectionné et du réseau électrique pré-câblé associé à ce secteur angulaire.

Alternativement, selon une première variante de réalisation de l'invention représentée schématiquement sur la figure 3a, il est possible de remplacer les contacteurs à balais par un rouleau secondaire fixe 30, monté parallèlement et en vis-à vis du rouleau principal 10. Le rouleau secondaire fixe 30 est muni de pistes conductrices continues 31, 32 disposées en vis-à-vis des pistes conductrices discontinues sectorisées 13, 14 du rouleau principal 10. Les axes 33, 16 des deux rouleaux fixes et rotatifs, peuvent être reliés entre eux à leurs deux extrémités opposées, par exemple par des lames flexibles croisées 34, ou alternativement, par des engrenages 35 et par des biellettes 36 associées à des roulements à billes 37 comme représenté schématiquement sur la figure 3b. Des connexions électriques sont montées sur chaque piste conductrice continue 31, 32 du rouleau secondaire 30 pour permettre de connecter les sources d'alimentation et les propulseurs électriques. Le rouleau secondaire 30 permet alors d'assurer la transmission de la puissance et des signaux de commande entre les sources d'alimentation et les propulseurs électriques par l'intermédiaire d'un contact inter-pistes sans frottement, ce qui assure une durée de vie infinie.

Alternativement, selon une deuxième variante de réalisation de l'invention représentée sur la figure 4, il est possible de remplacer les contacteurs à balais par un rouleau secondaire 70, mobile en rotation autour de son axe longitudinal 46, et monté parallèlement et en vis-à vis du rouleau principal 10. Les axes 16, 46 des deux rouleaux, principal et secondaire, peuvent être reliés entre eux à leurs deux extrémités opposées, par exemple par des lames flexibles croisées comme représenté sur la figure 3a, ou alternativement, par des biellettes associées à des roulements à billes et des engrenages, comme représenté sur la figure 3b. Le rouleau secondaire 70 est alors divisé en plusieurs secteurs angulaires différents 41, 42, 43, 44 répartis autour d'un axe longitudinal 46 de rotation du rouleau secondaire. Dans ce cas, les pistes conductrices d'entrée et de sortie du rouleau secondaire 47, 48 sont discontinues et sectorisées. Pour limiter le nombre de câbles de liaisons passant entre les deux zones d'entrée et de sortie du rouleau principal 10, il est possible de n'utiliser qu'un seul moteur pas à pas fixé sur l'axe 16 du rouleau principal pour entraîner le rouleau principal en rotation, le rouleau secondaire 70 étant entraîné en rotation par le rouleau principal. Pour cela, la longueur développée du rouleau secondaire doit être égale à un multiple de la longueur développée du rouleau principal de sorte que la longueur LD2 séparant deux positions successives du rouleau secondaire soit égale à la longueur LD1 séparant deux positions successives du rouleau principal. Le nombre total de configurations de pilotage est alors égal au nombre de secteurs du rouleau principal multiplié par le nombre de secteurs du rouleau secondaire.

Les figures 5A, 5B, 5C, 5D, 5E, 5F illustrent un exemple de différentes configurations de pilotage d'un système de commande comportant trois sources d'alimentation et deux rouleaux mobiles en rotation pour assurer la commande de trois propulseurs différents. Le rouleau principal 10 comporte deux secteurs angulaires différents, chaque secteur angulaire étant muni de trois pistes conductrices d'entrée et de trois pistes conductrices de sortie respectivement associées à deux réseaux électriques pré-câblés différents, comme décrit en liaison avec la figure 4. Le rouleau secondaire 70 comporte trois secteurs angulaires différents munis chacun de trois pistes conductrices d'entrée et de trois pistes conductrices de sortie. Le nombre de configurations de pilotage différentes est alors égal à six. Chaque configuration de pilotage est sélectionnée par les positions respectives des deux rouleaux, respectivement principal 10 et secondaire 70, les secteurs angulaires des rouleaux, principal et secondaire, dédiés à cette configuration de pilotage, étant placés en regard l'un de l'autre. Les pistes conductrices d'entrée et de sortie gravées sur les secteurs sélectionnés des deux rouleaux, principal et secondaire, sont alors respectivement en contact entre elles et les propulseurs électriques sont alimentés par le réseau électrique pré-câblé 15 dédié au secteur angulaire sélectionné sur le rouleau principal.

Par exemple, dans les trois premières configurations de pilotage illustrées sur les figures 5A, 5B, 5C, le rouleau principal est dans la position 1 et dans les trois dernières configurations de pilotage illustrées sur les figures 5D, 5E, 5F, le rouleau principal est dans la position 2. Le rouleau secondaire est successivement positionné dans les positions 1, puis 2, puis 3. La première configuration de pilotage connecte les propulseurs THR1, THR2, THR3 respectivement aux sources d'alimentation PPU3, PPU2, PPU1. La deuxième configuration de pilotage connecte les propulseurs THR1, THR2, THR3 respectivement aux sources d'alimentation PPU3, PPU1, PPU2. La troisième configuration de pilotage connecte les propulseurs THR1, THR2, THR3 respectivement aux sources d'alimentation PPU2, PPU3, PPU1. La quatrième configuration de pilotage connecte les propulseurs THR1, THR2, THR3 respectivement aux sources d'alimentation PPU1, PPU2, PPU3. La cinquième configuration de pilotage connecte les propulseurs THR1, THR2, THR3 respectivement aux sources d'alimentation PPU2, PPU1, PPU3. Et enfin, la sixième configuration de pilotage connecte les propulseurs THR1, THR2, THR3 respectivement aux sources d'alimentation PPU1, PPU3, PPU2.

Dans le cas d'un besoin de 24 configurations de pilotage différentes, il est nécessaire d'utiliser un rouleau principal 10 comportant quatre secteurs angulaires différents et un rouleau secondaire 70 comportant six secteurs angulaires différents.

Alternativement, selon une troisième variante de réalisation de l'invention représentée sur la figure 6, il est possible d'utiliser deux rouleaux principaux rotatifs identiques 10, 60 disposés symétriquement de part et d'autre d'un rouleau secondaire 40 fixe, le rouleau secondaire étant muni de pistes conductrices d'entrée et de sortie continues comme dans la figure 3. Cela permet de réaliser une redondance des réseaux électriques pré-câblés 15a, 15b et permet d'auto-équilibrer les masses du dispositif de commutation. Comme dans la deuxième variante de réalisation, les axes de rotation des trois rouleaux, principaux et secondaire, peuvent être reliés entre eux à leurs deux extrémités opposées, par exemple par des lames flexibles croisées 34, ou alternativement, par des biellettes 36 associées à des roulements à billes 37 et éventuellement des engrenages 35, positionnés sur chaque rouleau, permettant de garantir le bon roulement des rouleaux entre eux.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, le nombre de sources d'alimentation utilisées et le nombre de propulseurs commandés peuvent être différents de ceux explicitement décrits dans les exemples de réalisation. Le nombre de secteurs angulaires de chaque rouleau principal et/ou secondaire peut également varier selon le nombre de configurations de pilotage différentes souhaitées. Au lieu de commander simultanément plusieurs propulseurs électriques par différentes sources d'alimentation, il est également possible de diminuer le nombre de sources d'alimentation et de commander séquentiellement différents propulseurs électriques par une source d'alimentation commune. Enfin, il est également possible d'utiliser plusieurs dispositifs de commutation différents pour commander un grand nombre de propulseurs électriques.

## Revendications

1. Système de commande de plusieurs propulseurs électriques comportant au moins deux sources d'alimentation, en puissance et en signaux de commande, (PPU1, PPU2, PPU3, PPU4) aptes à piloter indifféremment chacun des propulseurs électriques, un dispositif de commutation apte à relier n'importe laquelle des sources d'alimentation (PPU1, PPU2, PPU3, PPU4) à n'importe lequel des propulseurs électriques (THR1, THR2, THR3, THR4), le dispositif de commutation comportant un rouleau principal (10) rotatif divisé en plusieurs secteurs angulaires (6, 7, 8, 9) différents répartis autour d'un axe longitudinal (16) de rotation du rouleau principal (10), **caractérisé en ce que** chaque secteur angulaire comporte des pistes conductrices d'entrée (13), des pistes conductrices de sortie (14) et un réseau électrique pré-câblé (15) dédié reliant les pistes conductrices d'entrée aux pistes conductrices de sortie du secteur angulaire correspondant, les réseaux électriques pré-câblés (15) associés aux différents secteurs angulaires étant tous différents et dédiés à différentes configurations de pilotage des propulseurs électriques par les sources d'alimentation.

2. Système de commande selon la revendication 1, **caractérisé en ce que** chaque réseau électrique pré-câblé (15) est solidaire en rotation, du secteur angulaire associé.

3. Système de commande selon la revendication 2, **caractérisé en ce qu'**il comporte en outre au moins un moteur pas à pas (17), fixé sur l'axe longitudinal de rotation (16) du rouleau principal (10), le moteur pas à pas étant apte à entraîner le rouleau principal en rotation pour sélectionner un secteur angulaire du rouleau principal, le secteur angulaire sélectionné étant dédié à une configuration de pilotage choisie.

4. Système de commande selon l'une des revendications 1 à 3, **caractérisé en ce que** les pistes conductrices d'entrée (13) et les pistes conductrices de sortie (14) sont respectivement aménagées en deux zones distinctes situées à deux extrémités opposées du rouleau principal (10).

5. Système de commande selon l'une des revendications 1 à 4, **caractérisé en ce que** les différents secteurs angulaires (6, 7, 8, 9) sont séparés entre eux par des isolants (11).

6. Système de commande selon l'une des revendications 1 à 5, **caractérisé en ce qu'**il comporte en outre des premiers contacteurs à balais (20) aptes à relier les sources d'alimentation (PPU1, PPU2, PPU3, PPU4) aux pistes conductrices d'entrée (13) respectives du secteur angulaire sélectionné et des seconds contacteurs à balais (21) aptes à relier les propulseurs électriques (THR1, THR2, THR3, THR4) aux pistes de sortie (14) respectives du secteur angulaire sélectionné.

7. Système de commande selon l'une des revendications 1 à 5, **caractérisé en ce qu'**il comporte en outre un rouleau secondaire (30) fixe, monté parallèlement au rouleau principal (10), le rouleau secondaire comportant des pistes conductrices continues (31, 32), respectivement disposées en vis-à-vis des pistes conductrices sectorisées (13, 14) du rouleau principal (10).

8. Système de commande selon la revendication 7, **caractérisé en ce que** le rouleau secondaire (40) comporte un axe longitudinal (33) relié à l'axe longitudinal de rotation (16) du rouleau principal (10) par l'intermédiaire de lames flexibles croisées (34).

9. Système de commande selon la revendication 7, **caractérisé en ce qu'**il comporte deux rouleaux principaux (10, 60) rotatifs montés parallèlement et symétriquement de part et d'autre du rouleau secondaire (40), les deux rouleaux principaux comportant des pistes conductrices discontinues disposées en vis-à-vis des pistes conductrices continues du rouleau secondaire.

10. Système de commande selon la revendication 9, **caractérisé en ce que** le rouleau secondaire (40) comporte un axe longitudinal (33) relié à deux axes longitudinaux de rotation (16a, 16b) des deux rouleaux principaux (10, 60) par l'intermédiaire de lames flexibles croisées (34).

11. Système de commande selon l'une des revendications 7 ou 9, **caractérisé en ce que** l'axe longitudinal (33) du rouleau secondaire (40) est relié à l'axe longitudinal de rotation du rouleau principal (10), respectivement aux axes longitudinaux de rotation des deux rouleaux principaux (10, 60), par l'intermédiaire de biellettes (36) associées à des roulements (37) et des engrenages (35).

12. Système de commande selon l'une des revendications 1 à 5, **caractérisé en ce qu'**il comporte en outre un rouleau secondaire (70) rotatif autour d'un axe longitudinal (46) et monté parallèlement au rouleau principal (10), le rouleau secondaire (70) comportant des pistes conductrices discontinues (47, 48) respectivement disposées en vis-à-vis des pistes conductrices sectorisées (13, 14) du rouleau principal.

13. Dispositif de propulsion électrique comportant au moins un système de commande selon l'une des revendications précédentes, et comportant en outre au moins deux propulseurs électriques connectés à n'importe laquelle des sources d'alimentation par l'intermédiaire du système de commande.

## Patentansprüche

1. System zum Steuern von mehreren elektrischen Triebwerken, die wenigstens zwei Versorgungsquellen, Stromquellen und Steuersignalquellen (PPU1, PPU2, PPU3, PPU4), umfassen, die unabhängig jedes elektrische Triebwerk steuern können, eine Schaltvorrichtung, die beliebige der Versorgungsquellen (PPU1, PPU2, PPU3, PPU4) mit beliebigen der elektrischen Triebwerke (THR1, THR2, THR3, THR4) verbinden können, wobei die Schaltvorrichtung eine Hauptdrehrolle (10) umfasst, die in mehrere unterschiedliche Winkelsektoren (6, 7, 8, 9) unterteilt ist, die um eine Längsrotationsachse (16) der Hauptrolle (10) verteilt sind, **dadurch gekennzeichnet, dass** jeder Winkelsektor Eingangsleiterbahnen (13), Ausgangsleiterbahnen (14) und ein dediziertes vorverdrahtetes Stromnetz (15) umfasst, das die Eingangsleiterbahnen mit den Ausgangsleiterbahnen des entsprechenden Winkelsektors verbindet, wobei die mit den verschiedenen Winkelsektoren assoziierten vorverdrahteten Stromnetze (15) alle unterschiedlich und für verschiedene Konfigurationen zum Steuern der elektrischen Triebwerke mit den Versorgungsquellen dediziert sind.

2. Steuersystem nach Anspruch 1, **dadurch gekennzeichnet, dass** jedes vorverdrahtete Stromnetz (15) drehfest mit dem assoziierten Winkelsektor verbunden ist.

3. Steuersystem nach Anspruch 2, **dadurch gekennzeichnet, dass** es ferner wenigstens einen Schrittmotor (17) umfasst, der an der Längsrotationsachse (16) der Hauptrolle (10) angebracht ist, wobei der Schrittmotor die Hauptrolle drehen kann, um einen Winkelsektor der Hauptrolle auszuwählen, wobei der gewählte Winkelsektor für eine gewählte Steuerkonfiguration dediziert ist.

4. Steuersystem nach einem der Ansprüche 1 bis 3, **dadurch gekennzeichnet, dass** die Eingangsleiterbahnen (13) und die Ausgangsleiterbahnen (14) jeweils in zwei getrennten Zonen angeordnet sind, die sich auf zwei gegenüberliegenden Enden der Hauptrolle (10) befinden.

5. Steuersystem nach einem der Ansprüche 1 bis 4, **dadurch gekennzeichnet, dass** die verschiedenen Winkelsektoren (6, 7, 8, 9) durch Isolatoren (11) voneinander getrennt sind.

6. Steuersystem nach einem der Ansprüche 1 bis 5, **dadurch gekennzeichnet, dass** es ferner erste Schleifkontakte (20), die die Versorgungsquellen (PPU1, PPU2, PPU3, PPU4) mit den jeweiligen Eingangsleiterbahnen (13) des gewählten Winkelsektors verbinden können, und zweite Schleifkontakte (21) umfasst, die die elektrischen Triebwerke (THR1, THR2, THR3, THR4) mit den jeweiligen Ausgangsbahnen (14) des gewählten Winkelsektors verbinden können.

7. Steuersystem nach einem der Ansprüche 1 bis 5, **dadurch gekennzeichnet, dass** es ferner eine sekundäre Rolle (30) umfasst, die parallel zur Hauptrolle (10) montiert ist, wobei die sekundäre Rolle kontinuierliche Leiterbahnen (31, 32) umfasst, die jeweils den segmentierten Leiterbahnen (13, 14) der Hauptrolle (10) zugewandt angeordnet sind.

8. Steuersystem nach Anspruch 7, **dadurch gekennzeichnet, dass** die sekundäre Rolle (40) eine Längsachse (33) hat, die mit der Längsrotationsachse (16) der Hauptrolle (10) mittels gekreuzter flexibler Bänder (34) verbunden ist.

9. Steuersystem nach Anspruch 7, **dadurch gekennzeichnet, dass** es zwei Hauptrotationsrollen (10, 60) umfasst, die parallel und symmetrisch auf beiden Seiten der sekundären Rolle (40) montiert sind, wobei die beiden Hauptrollen diskontinuierliche Leiterbahnen umfassen, die den kontinuierlichen Leiterbahnen der sekundären Rolle zugewandt angeordnet sind.

10. Steuersystem nach Anspruch 9, **dadurch gekennzeichnet, dass** die sekundäre Rolle (40) eine Längsachse (33) hat, die mit zwei Längsrotationsachsen (16a, 16b) der beiden Hauptrollen (10, 60) mittels gekreuzter flexibler Bänder (34) verbunden ist.

11. Steuersystem nach Anspruch 7 oder 9, **dadurch gekennzeichnet, dass** die Längsachse (33) der sekundären Rolle (40) mit der Längsrotationsachse der Hauptrolle (10) und jeweils mit den Längsrotationsachsen der beiden Hauptrollen (10, 60) mittels mit Wälzlagern (37) und Zahnrädern (35) assoziierten Verbindungsstäben (36) verbunden ist.

12. Steuersystem nach einem der Ansprüche 1 bis 5, **dadurch gekennzeichnet, dass** es ferner eine sekundäre Rolle (70) umfasst, die um eine Längsachse (46) dreht und parallel zur Hauptrolle (10) montiert ist, wobei die sekundäre Rolle (70) diskontinuierliche Leiterbahnen (47, 48) umfasst, die jeweils den segmentierten Leiterbahnen (13, 14) der Hauptrolle zugewandt angeordnet sind.

13. Elektrische Triebwerksvorrichtung, die wenigstens ein Steuersystem nach einem der vorherigen Ansprüche umfasst und ferner wenigstens zwei elektrische Triebwerke umfasst, die mittels des Steuersystems mit beliebigen der Versorgungsquellen verbunden sind.

## Claims

1. A system for controlling a plurality of electric thrusters comprising at least two supply sources (PPU1, PPU2, PPU3, PPU4), namely power sources and control signal sources, capable of independently controlling each electric thruster, a switching device capable of connecting any of the supply sources (PPU1, PPU2, PPU3, PPU4) to any of the electric thrusters (THR1, THR2, THR3, THR4), the switching device comprising a main rotary roller (10) divided into a plurality of different angular sectors (6, 7, 8, 9) distributed around a longitudinal axis of rotation (16) of the main roller (10), **characterised in that** each angular sector comprises input conductive tracks (13), output conductive tracks (14) and a dedicated pre-wired electrical network (15) connecting the input conductive tracks to the output conductive tracks of the corresponding angular sector, the pre-wired electrical networks (15) associated with the various angular sectors all being different and dedicated to various configurations for controlling the electric thrusters by the supply sources.

2. The control system according to claim 1, **characterised in that** each pre-wired electrical network (15) is rotationally integral with the associated angular sector.

3. The control system according to claim 2, **characterised in that** it further comprises at least one stepper motor (17) attached to the longitudinal axis of rotation (16) of the main roller (10), the stepper motor being capable of rotating the main roller in order to select an angular sector of the main roller, the selected angular sector being dedicated to a selected control configuration.

4. The control system according to any one of claims 1 to 3, **characterised in that** the input conductive tracks (13) and the output conductive tracks (14) are respectively arranged in two distinct zones located at two opposite ends of the main roller (10).

5. The control system according to any one of claims 1 to 4, **characterised in that** the various angular sectors (6, 7, 8, 9) are separated from each other by isolators (11).

6. The control system according to any one of claims 1 to 5, **characterised in that** it further comprises first brush contactors (20) capable of connecting the supply sources (PPU1, PPU2, PPU3, PPU4) to the respective input conductive tracks (13) of the selected angular sector and second brush contactors (21) capable of connecting the electric thrusters (THR1, THR2, THR3, THR4) to the respective output tracks (14) of the selected angular sector.

7. The control system according to any one of claims 1 to 5, **characterised in that** it further comprises a fixed secondary roller (30) mounted parallel to the main roller (10), the secondary roller comprising continuous conductive tracks (31, 32) respectively disposed facing the segmented conductive tracks (13, 14) of the main roller (10).

8. The control system according to claim 7, **characterised in that** the secondary roller (40) comprises a longitudinal axis (33) connected to the longitudinal axis of rotation (16) of the main roller (10) by means of crossed flexible strips (34).

9. The control system according to claim 7, **characterised in that** it comprises two main rotary rollers (10, 60) mounted in a parallel and symmetrical manner on either side of the secondary roller (40), the two main rollers comprising discontinuous conductive tracks disposed facing the continuous conductive tracks of the secondary roller.

10. The control system according to claim 9, **characterised in that** the secondary roller (40) comprises a longitudinal axis (33) connected to two longitudinal axes of rotation (16a, 16b) of the two main rollers (10, 60) by means of crossed flexible strips (34).

11. The control system according to claim 7 or claim 9, **characterised in that** the longitudinal axis (33) of the secondary roller (40) is connected to the longitudinal axis of rotation of the main roller (10), and respectively to the longitudinal axes of rotation of the two main rollers (10, 60), by means of connecting rods (36) associated with roller bearings (37) and gears (35).

12. The control system according to any one of claims 1 to 5, **characterised in that** it further comprises a secondary roller (70) rotating about a longitudinal axis (46) and mounted parallel to the main roller (10), the secondary roller (70) comprising discontinuous conductive tracks (47, 48) respectively disposed facing the segmented conductive tracks (13, 14) of the main roller.

13. An electric thrust device comprising at least one control system according to any one of the preceding claims, and further comprising at least two electric thrusters connected to any of the supply sources by means of the control system.
